# EUROPEAN PATENT SPECIFICATION

(11) **EP 0 468 671 B1**
(45) Date of publication and mention of the grant of the patent: **03.01.1996**
(21) Application number: 91306297.2
(22) Date of filing: 11.07.1991
(51) Int. Cl.: G02B 6/38

(54) **Fiber optic interconnect for wall outlet**
Glasfaserverbinder für Wanddurchführung
Interconnexion à fibres optiques pour prise murale

(30) Priority: 27.07.1990 US 558933
(43) Date of publication of application: 29.01.1992
(73) Proprietor: THE WHITAKER CORPORATION, Wilmington, Delaware 19808 (US)
(72) Inventor: Mulholland, Denis Gregory, Lancaster, Pennsylvania 17601 (US); Schaffer, Ronald Richard, Harrisburg, Pennsylvania 17109 (US); Warner, Gary Nevin, Harrisburg, Pennsylvania 17112 (US)
(74) Representative: Warren, Keith Stanley

(56) References cited:
- EP-A- 0 335 531
- EP-A- 0 375 669
- DE-U- 8 906 127
- US-A- 4 611 887
- US-A- 4 960 317
- US-A- 4 991 929

## Description

This invention relates to an interconnect for a wall outlet for a fiber optic connector. The insert converts the wall outlet from an outlet for interconnection of plug connectors, with connectors of the push-pull coupling type.

Wall outlets for fiber optic connectors are known. For example, US-A-4 611 887 discloses and claims a fiber optic connector assembly and a wall outlet into which it connects. This interconnect system is designed to be easily assembled and for accurately aligning the terminated ends of fiber optic transmission members for optimum operation.

US-A-4 960 317 discloses another fiber optic wall outlet having an annular flange for mounting to a wall, and a hood mounted in the flange. The wall outlet further includes a spring member which urges the hood to snap outward, and fingers which engage against the annular flange and prevent the hood from snapping outward. An interconnect assembly, to which a first optical fiber cable is connected, is mounted in the wall outlet. When the hood snaps outward, access is provided to the interconnect assembly so that a plug connected to a second optical fiber cable, such as a FSD plug and cable, can be plugged into the interconnect assembly.

Advantageous would be a means of converting a wall outlet, to an assembly which would provide interconnect capabilities with the push-pull coupling type of connectors. The present invention relates to an insert and to an interconnect assembly for achieving just such advantage.

The present invention consists in a fiber optic interconnect assembly as defined in claim 1.

EP-A-0 375 669 discloses an assembly comprising a receptacle receiving from one side, a push-fit duplex fiber optic connector, and from the other side two push-fit simplex optical connectors. Abutting ends of the optical fibers of the connectors are secured in alignment by means of sleeves.

US-A-4 991 929 discloses an assembly comprising a receptacle which mates with a pair of bayonet type fiber optic connectors, abutting ends of the optical fibers of the connectors being secured in alignment by means of a longitudinally split sleeve.

There is disclosed herein an interconnect assembly within a wall outlet having a hook assembly with an aperture for receiving therethrough a plug terminated optical fiber cable. The plug is received through the aperture and interconnected by means of the interconnect assembly with a second optical fiber cable. The assembly comprises a receptacle housing having at least one forward extending compartment structure open at a front receiving face and a receptacle within the housing for receiving the first optical cable within the compartment structure for connection to the plug terminating the first optical fiber cable. The assembly further comprises an insert with a guide port. The guide port receives the forward extending compartment structure of the receptacle housing with the receptacle. The insert further includes connecting means for securing the insert to the hood assembly of the wall outlet.

The interconnect assembly has a wall outlet hood assembly further including securing means situated to the sides of the aperture. The securing means comprises latching beams each terminating in a paw with lip. The insert further comprises a platform with spacings at opposing ends defining clearance for snap-in press fit between the flanges so as to be captured by each paw and lip of each flange. The insert, further, may be characterized by a face forward extending with the guide port. The face has defined dimensions for close fit through the aperture of the outlet hood assembly to thereby position the receptacle housing and receptacle for receiving the plug of the first optical fiber cable. The forward extending face further has chamfered edges to provide equal stressing to the latching beams during snap-in press fit of the insert.

The receptacle, further, comprises a base with a front socket extending therefrom and having longitudinal axis and axial bore. The base has at least two resilient catch pieces of cantilever form extending from the base parallel to and on opposing sides of the longitudinal axis of the front socket. The catch pieces terminate in protrusions and lip structures.

The interconnect assembly, further, includes an alignment sleeve encompassed by the front socket of the receptacle with the longitudinal axis of the alignment sleeve extending parallel with the longitudinal axis of the socket. The alignment sleeve may nave annular beveled front edge.

Each catch piece comprises a tab body terminating in protrusion and lip structure. Each protrusion may be wider than eacn tab body cf each catch piece.

The receptacle housing comprises a base having the compartment structure extending forward therefrom. The base is characterized by at least one nub and one recess for fit to complementary nub and recess of an attaching element.

The first optical fiber cable and plug comprise a plug housing with spacing through its body at a surface of a forward section and with defined exterior profile at a rearward section. Further included is a connector assembly accommodated by and substantially within the plug housing, the connector assembly having disposed at one exterior surface thereof, ridge and slot and, in conjunction therewith, tab. The ridge, slot and tab are exposed through the spacing at the surface of the forward section of the plug housing. Further included is a ferrule for fixing the optical fiber on a center axis thereof. The ferrule is accommodated within the connector assembly. The lip structure of each catch piece of the receptacle is beveled inwardly to facilitate lead-in to the spacing of the plug housing as the optical fiber connector is loaded into the wall outlet and connected to the interconnect assembly.

An embodiment of the present invention will now be described by way of example with reference to the accompanying drawings, in which :

FIGURE 1 is an exploded perspective view of a duplex interconnect assembly for a wall socket including a coupling bushing.

FIGURE 2 is a perspective view of an insert of the duplex interconnect assembly from a direction opposite that of Figure 1.

FIGURE 3 is a sectional view of wall outlet and duplex interconnect assembly showing the interconnect assembly being intermated to the hood of the outlet.

FIGURE 4 is a sectional view of wall outlet and interconnect assembly showing the interconnect assembly intermated to the hood of the outlet.

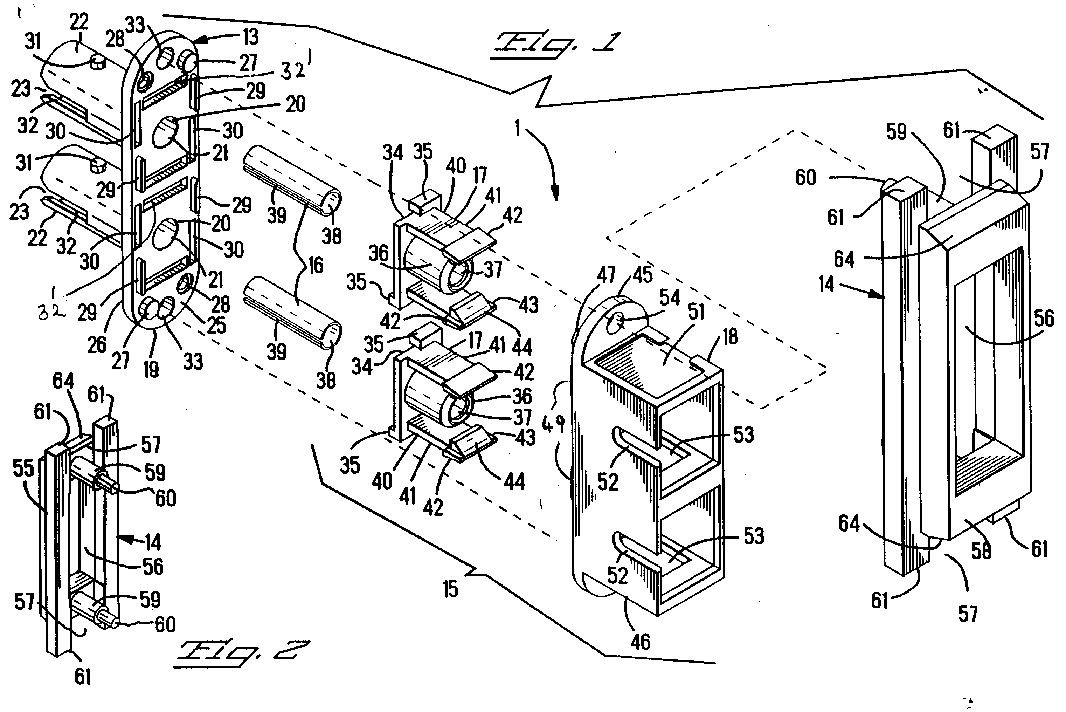

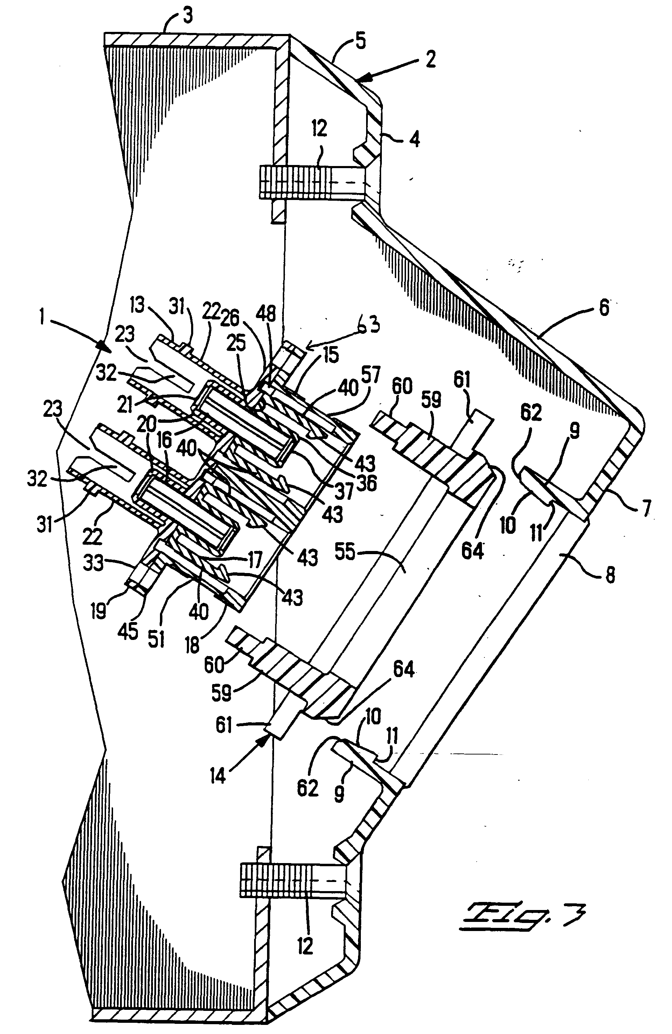

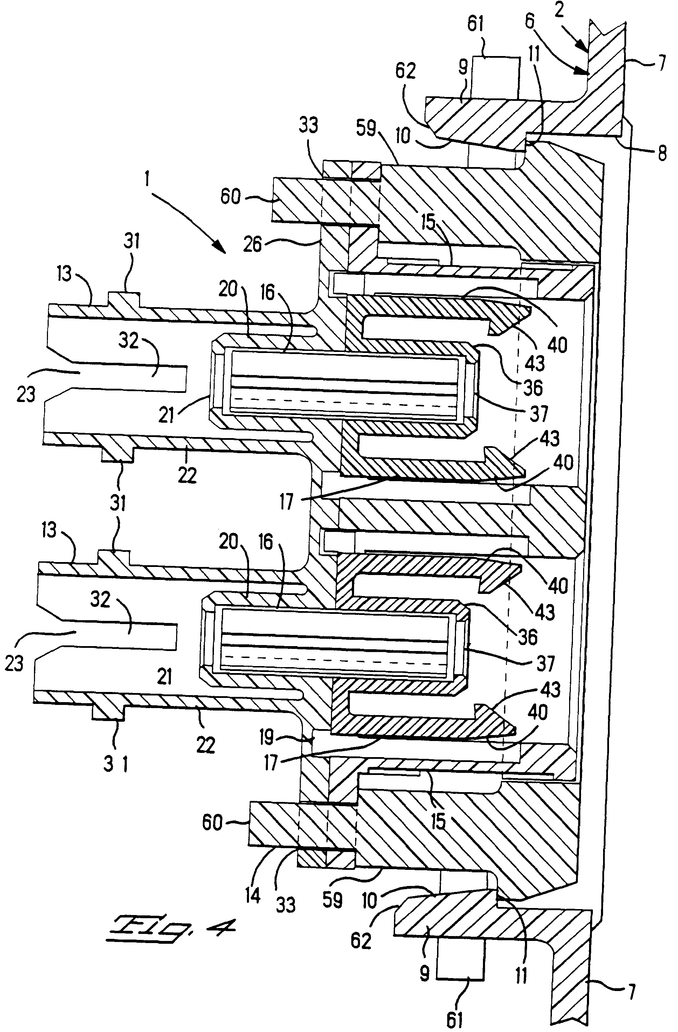

Shown in Figures 1 and 2, is a preferred embodiment of the interconnect assembly 1 of the present invention, and in Figures 3 and 4 are shown interconnect assembly 1 and wall outlet 2. Figure 3 illustrates the mating of the interconnect 1, including insert 14, to the hood 6 of the wall outlet 2, and Figure 4 shows the interconnect assembly 1 mated to the hood 6 of the outlet 2. Shown in Figure 3 is wall outlet 2 having receptacle box 3 and hood assembly 4. Hood assembly 4 includes base 5 with tent-shaped hood 6 and front plate 7 with aperture 8 for receiving therethrough a plug terminated optical fiber cable, not shown. The plug terminated cable is inserted through the aperture 8 to mate with the interconnect assembly 1. Further shown are latching beams 9 having paws 10 with lips 11. Hood assembly 4 is secured to receptacle box 3 by means of rivets or other type securing means 12.

The particular preferred interconnect assembly 1 of the present embodiment is illustrated in Figures 1, 2, 3 and 4. Shown are insert 14 and adapter assembly 15, which includes slotted sleeves 16, receptacles 17, and receptacle housing 18. Also shown is a duplex coupler 13 for a pair of bayonet type optical fiber connectors, not shown, each coupler comprising base 19 having inner socket 20 with axially extending bore 21, which bore 21 forms a continuous passageway through both the socket 20 and base 19. Further, as part of the duplex coupler 13 is a pair of barrel-shaped coupling bodies 22, extending from base 19, and each encompassing, within its interior 23, a corresponding socket 20. Latching nubs 31 are on the outside surface of body 22. Keying slots 32 are in the rear portion of body 22 for accepting a bayonet plug connector, as disclosed in U.S. 4,991,929.

The base 19 of the coupler 13 has forward face 25 and rearward face 26. The said sockets 20 and coupling bodies 22 extend rearward from rearward face 26 of the base 19 while forward face 25 is characterized by two sets of nubs 27 and recesses 28. The nubs 27 and recesses 28 are shaped to complement one another for fit one to the other, for example, as when the base 19 of the coupling bushing 13 intermates with the base 45 of the receptacle housing 18, having nubs 47 and recesses 48 for complementary fit thereto. As shown the nubs 27 are positioned so as to act as aligning and orienting features when intermating with the complementary features of base 45.

Further, the base 19 is characterized by ridges 29 and slots 30 in a sequence around the periphery of a rectangular pattern. The sequence of ridges 29 and slots 30, similarly to the nubs 27 and recesses 28, fits to a complementary sequence of features of the base 45 of the receptacle housing 18. The particular sequence of ridges 29 and slots 30 forming a rectangular pattern provides a feature for oriented intermating with the complementary features of bases 34 of the receptacles 17, while the nubs 27 and recesses 28 provide aligning and oriented intermating with base 45. As intermated together, duplex coupler 13 and adapter assembly 15 form a coupling bushing 63 having commonly aligned ports 33 and 54 for receiving a securing means for attachment of the coupling bushing 63 to insert 14 as hereinafter described.

Adapter assembly 15 has a pair of receptacles 17 each including a base 34, substantially rectangular in shape, with rearward extending flanges 35 that are horizontally disposed across approximately one-half of the horizontal perimeter of each base, for fit to within slots 32' of the coupling bushing 13. Each receptacle 17 further includes socket 36 with axial bore 37. When adapter assembly 15 is intermated with coupler 13, socket 36 of each receptacle 17 extending forward, in combination with socket 20 of each coupler 13 extending rearward, forms a continuous supporting structure for intermating with a bayonet connector, not shown, inserted into the barrel-shaped coupling body 22. Further, axial bore 37 of each socket 36, in combination with bore 21 of each socket 20, forms a continuous passageway for access by a part of the mated bayonet connector, not shown. Each of slotted sleeve 16 fits within both the axial bore 37 of socket 36 and the bore 21 of socket 20 to form a continuous passageway through the bore 38 of the said sleeve 16. Each sleeve 16 has slot 39 to permit expansion of the sleeve as a connector is inserted therein. Each receptacle 17 provides means for connecting the bayonet connector through the coupler 13 to another element such as a connector of the push-pull type, not shown, inserted through the aperture 8 of the hood assembly 4 of the wall outlet 2. The connection is provided by the combination of each socket 36 and resilient catch pieces 40. The resilient cantilever catch pieces 40 extend from base 34 and are in the form of cantilever arms extending parallel to and on opposing sides of the longitudinal axis of the socket 36. The cantilever pieces 40 have tab sections 41, protrusions 42 and lip structures 43. In the embodiment shown, a single surface 44 of lip 43 is beveled, however in another embodiment, lip 43 would have side bevels to facilitate lead-in as the receptacle 17 is interconnected, in combination with the coupler 13, to another element such as the plug housing of a push-pull connector, not shown. Receptacle housing 18 has base 45 and forward extending dual compartment structure 46. Base 45 is complementary to the base 19 of the coupler 13 in that it is characterized by nubs 47 which fit to recesses 28 of coupler 13, by recesses 48, which fit to nubs 27 of coupler 13, by ridges 49, which fit complementarily and provide an orientation with complementary slots 30 of coupler 13, and slots, not shown, which receive ridges 29 of the coupler 13. Dual structure 46 is characterized by inset planes 51 at the outside top and bottom of the structure 46, and key slots 52 to the side. Within the interior of the compartment structure 46, at top and bottom, are spacings 53 which accommodate the deflections of protrusions 42 during an intermating with a push-pull type of connector. Finally, the receptacle housing 18 has ports 54 for the accepting of pin 60 of insert 14, commonly through both ports 54 and ports 33 of the coupling bushing 63.

The interconnect assembly 1 further includes insert 14 which functions as the securing feature between the remainder of the assembly 1 and the wall outlet 2 thereby converting the outlet from a FSD connector receptor to the push-pull connector receptor as shown. The insert 14 comprises a platform 55 with a guide port 56 for receiving the forward extending dual compartment structure 46 of the receptacle housing 18 with the receptacle 17 included therein. The platform has extensions 61 which define spacings 57 at opposing ends. The spacings 57 define clearances for snap-in press fit to the latching beams 9 of the hood assembly 4. The insert 14 has a forward extending face 58 having defined dimensions for close fit through the aperture 8 of the outlet hood 6, and further having chamfered leading edges 64 for ease of fit to latching beams 9 as hereinafter described. The fit of the extending face 58 provides the positioning of the receptacle housing 18 and receptacles 17 for receiving the plugs of the first optical fiber cable. Finally, the insert 14 has rearward extending posts 59, each terminating in a pin 60. The pin 60 terminated posts 59 provide connecting means to the receptacle base 45 and coupler base 19 through the commonly aligned ports 33 and 54 as hereinafter described.

The interconnect assembly is assembled by the first step of inserting each slotted sleeve 16 to within the bore 21 through base 19 to within socket 20 of the coupler 13. Socket 36 of each receptacle 17 is then fitted over and to encompass a portion of the slotted sleeve 16 extending from the bore 21 of the coupler 13. The slotted sleeve 16 is accommodated within the continuous axial bore 37 and 21 formed by the fit of each receptacle 17 to the front face 25 of coupler 13. Each receptacle 17 is secured to the base 19 of coupling bushing 13 by the fit of flanges 35 within the complimentary slots 32' of the coupler 13 and within the perimeter defined by extending ridges 29 and slots 30. Thereafter each receptacle 17 is secured to the forward face 25 of the coupler 13 by fitting receptacle housing 18 to the coupler 13 with nubs 47 of the housing 18 fitting to complimentary recesses 28 of the coupler 13 and nubs 27 of the coupler 13 fitting within complimentary recesses 48 of the housing 18. Further, ridges 49 of the housing 18 fit within slots 30 of coupler 13, and ridges 29 of the coupler 13 fit within said slots, not shown of the housing 18. This fit of ridges and slots and nubs and recesses provides oriented fit of the housing 18 to the base 19 of coupler 13. The base 34 of the housing 18 is then secured to the base 19 of the coupler 13 by the fit of the complementary recess, nub, slot and ridge features which, after intermating, are subjected to ultrasonics, or gluing by means of an adhesive, to fix the bases 34 and 19, one to the other. The combination of the receptacle housing 18 and receptacle 17 secured to the coupler forms the coupling bushing 63 which is a cooperating mechanism for attachment to a push-pull type of plug connector as disclosed in JP-A-62 78507.

With reference to Figures 3 and 4, the combined receptacle housing 18, receptacles 17, slotted sleeves 16 and coupler 13 is inserted into guide port 56 of insert 14 with each connecting pin 60 of insert 14 aligning and passing into the axially aligned common passageway of port 54 of receptacle housing 18 and port 33 of coupler 13. The connecting pin 60 of the insert 14 may have a split end and may be cold pressed, hot stamped or subjected to ultrasonics to form a permanent connection thereby forming a unitary body of the interconnect assembly 1, including the adapter assembly 15, insert 14, and the coupler 13. The unitary body is then snapped into the aperture 8 in the front plate 7 of hood assembly 4. Contact between the chamfers 64 of forward extending face 58 of insert 14 and the beveled surface 62 of each of paw 10 of each latching beam 9 of the hood assembly 4 forces the resilient latching beams 9 apart to accept the insert 14. Chamfers 64 provide an important function in that they cause an equal deflection of latching beams 9 thereby avoiding disproportionate stressing of one latching beam over the other. Upon the insert 14 clearing the lip 11 of each paw 10, the resilient latching beams 9 snap into place to capture the insert 14 and to hold the interconnect assembly 1 positioned at the hood assembly aperture 8 to accept inserted plug connectors terminated optical fiber cable.

## Claims

1. A fiber optic interconnect assembly (1) for interconnecting first and second optical fiber cables terminated to corresponding first and second plug connectors, the assembly comprising:
a rearward coupler (13) having a base (19) having a forward face (25) and a rear face (26), first sockets (20) projecting rearwardly from said rear face (26), and external first coupling bodies (22) surrounding said first sockets (20), the coupling bodies (22) having latching nubs (31) thereon for bayonet type connection to the first plug connectors;
a forward adaptor assembly (15) having receptacles (17) having second sockets (36) and catch pieces (40) for connection to the second plug connectors and a receptacle housing (18) projecting forwardly from its base (45), the base (45) having a rear face which is interengageable with the forward face (25) of the base (19) of the coupler (13), the receptacle housing (18) surrounding the receptacles (17);
an insert (14) securable to a front plate (7) of an outlet (2) and defining a guide port (56) surrounding the receptacle housing (18), the insert (14) being constructed to hold the rear face of the base (45) of the receptacle housing (18) in interengagement with a first portion of the forward face (25) of the base (19) of the coupler (13) and to hold the receptacles (17) in interengagement with a further portion of said forward face (25) with the second sockets (36) in end to end alignment with respective ones of the first sockets (20); and
slotted sleeves (16) for insertion partly within the first sockets (20) and partly within the second sockets (36) and being constructed to receive the first and second plug connectors in end to end alignment.

2. An assembly as claimed in claim 1, wherein each second socket (36) projects forwardly from a base (34) of the respective receptacle (17) which base (34) has a rear face which is interengageable with said further portion of the forward face (25) of the base (19) of the coupler (13).

3. An assembly as claimed in claim 2, wherein said further portion of the forward face (25) of the coupler (13) and the rear faces of the bases (34) of the receptacles (17) have respective interengageable horizontal flanges (35) and first slots (32'), the rear face of the base (45) of the receptacle housing (18) and the first portion of the forward face (25) of the base (19) of the coupler (13) having respective interengageable vertical ribs (29,49) and second slots (30) and respective interengageable nubs (47) and recesses (48) for guiding said ribs (29,49) into engagement with said slots.

4. An assembly as claimed in claim 1, 2 or 3, wherein the bases (19,45) of the coupler (13) and the receptacle housing (18) have alignable ports (33,54) for receiving pins (60) projecting rearwardly from a platform (55) of the insert (14), the pins (60) being fixable in the aligned ports (33,54).

5. An assembly as claimed in any one of the preceding claims, wherein said platform (55) has a forward face (58) having on opposite sides of said guide port (56) chamfered surfaces for guiding resilient latching beams (9) on said front plate (7) into latching engagement with the platform (55) with equal deflection of the latching beams (9).

6. An assembly as claimed in any one of the preceding claims, wherein the receptacle housing (18) has compartments (46) each for receiving a respective receptacle (17), the compartments (46) extending forwardly from the base (45) of the receptacle housing (18), the compartments (46) having floors having apertures (53) to accommodate deflection of said catch pieces (40) of the receptacles (17).

7. An assembly as claimed in any one of the preceding claims, wherein said bases (19,45) are fixed in their interengaging condition.

## Patentansprüche

1. Faseroptische Verbinderanordnung (1) zum Verbinden von ersten und zweiten optischen Faserkabeln, die an entsprechende erste und zweite Steckverbinder angeschlossen sind, wobei die Anordnung aufweist:
- einen hinteren Koppler (13), der einen Hauptteil (19) mit einer vorderen Fläche (25) und einer rückwärtigen Fläche (26), erste Buchsen (20), die von der rückwärtigen Fläche (26) nach hinten vorragen, und äußere erste Kupplungskörper (22) hat, die die ersten Buchsen (20) umgeben, wobei die Kupplungskörper (22) Verriegelungsnoppen (31) für eine bajonettartige Verbindung mit den ersten Steckverbindern tragen;
- eine vordere Adapteranordnung (15), die Aufnahmen (17) mit zweiten Buchsen (36) und Fangstücken (40) zum Verbinden mit den zweiten Steckverbindern und ein Aufnahmegehäuse (18) hat, das von seinem Hauptteil (45) nach vorn ragt, wobei das Hauptteil (45) eine rückwärtige Fläche hat, die mit der vorderen Fläche (25) des Hauptteils (19) des Kopplers (13) in Eingriff bringbar ist, wobei das Aufnahmegehäuse (18) die Aufnahmen (17) umgibt;
- einen Einsatz (14), der an einer Frontplatte (7) eines Auslasses (2) befestigbar ist und der eine Führungsöffnung (56) bildet, die das Aufnahmegehäuse (18) umgibt, wobei der Einsatz (14) so konstruiert ist, daß er die rückwärtige Fläche des Hauptteils (45) des Aufnahmegehäuses (18) in Eingriff mit einem ersten Teil der vorderen Fläche (25) des Hauptteils (19) des Kopplers (13) hält und die Aufnahmen (17) in Eingriff mit einem weiteren Teil der vorderen Fläche (25) hält, wobei die zweiten Buchsen (36) in einer Ausrichtung Ende gegen Ende mit entsprechenden der ersten Buchsen (20) sind; und
- geschlitzte Hülsen (16) zum Einsetzen teilweise innerhalb der ersten Buchsen (20) und teilweise innerhalb der zweiten Buchsen (36) und so konstruiert, daß sie die ersten und zweiten Steckverbinder in einer Ausrichtung Ende gegen Ende aufnehmen.

2. Anordnung nach Anspruch 1, bei der jede zweite Buchse (36) von einem Hauptteil (34) der entsprechenden Aufnahme (17) nach vorn vorragt, wobei das Hauptteil (34) eine hintere Fläche hat, die mit dem weiteren Teil der vorderen Fläche (25) des Hauptteils (19) des Kopplers (13) in Eingriff bringbar ist.

3. Anordnung nach Anspruch 2, bei der der weitere Teil der vorderen Fläche (25) des Kopplers (13) und die rückwärtigen Flächen der Hauptteile (34) der Aufnahmen (17) entsprechende miteinander in Eingriff bringbare horizontale Flansche (35) und erste Schlitze (32') haben, wobei die rückwärtige Fläche (35) des Hauptteils (45) des Aufnahmegehäuses (18) und der erste Teil der vorderen Fläche (25) des Hauptteils (19) des Kopplers (13) entsprechende miteinander in Eingriff bringbare vertikale Rippen (29, 49) und zweite Schlitze (30) und entsprechende miteinander in Eingriff bringbare Noppen (47) und Ausnehmungen (48) zum Führen der Rippen (29, 49) in Eingriff mit den Schlitzen haben.

4. Anordnung nach Anspruch 1, 2 oder 3, bei der die Hauptteile (19, 45) des Kopplers (13) und des Aufnahmegehäuses (18) miteinander ausrichtbare Öffnungen (33, 54) zur Aufnahme von Stiften (60) haben, die von einer Plattform (55) des Einsatzes (14) nach hinten vorragen, wobei die Stifte (60) in den ausgerichteten Öffnungen (33, 54) befestigbar sind.

5. Anordnung nach einem der vorhergehenden Ansprüche, bei der die Plattform (55) eine vordere Fläche (58) hat, die an entgegengesetzten Seiten der Führungsöffnung (56) abgeschrägte Oberflächen zum Führen von nachgiebigen Verriegelungsarmen (9) an der Frontplatte (7) in Verriegelungseingriff mit der Plattform (55) unter gleicher Verformung der Verriegelungsarme (9) hat.

6. Anordnung nach einem der vorhergehenden Ansprüche, bei der das Aufnahmegehäuse (18) Abteile (46) jeweils zum Aufnehmen einer entsprechenden Aufnahme (17) hat, wobei die Abteile (46) sich von dem Hauptteil (45) des Aufnahmegehäuses (18) nach vorn erstrecken und wobei die Abteile (46) Böden mit Öffnungen (53) haben, um die Verformung der Fangstücke (40) der Aufnahmen (17) unterzubringen.

7. Anordnung nach einem der vorhergehenden Ansprüche, bei der die Hauptteile (19, 45) in ihrer Eingriffsstellung miteinander befestigt sind.

## Revendications

1. Assemblage (1) d'interconnexion de fibres optiques pour l'interconnexion de premier et second câbles et fibres optiques terminés par des premier et second connecteurs à fiches correspondants, l'assemblage comportant :
un coupleur arrière (13) ayant une embase (19) présentant une face avant (25) et une face arrière (26), des premières douilles (20) faisant saillie vers l'arrière de la face arrière (26), et des premiers corps extérieurs (22) d'accouplement entourant lesdites premières douilles (20), les corps (22) d'accouplement portant des ergots (31) de verrouillage pour un raccordement du type à baïonnette avec les premiers connecteurs à fiches ;
un ensemble à adaptateur avant (15) ayant des logements (17) comportant des secondes douilles (36) et des pièces d'accrochage (40) pour une connexion sur les seconds connecteurs à fiches et un boîtier (18) de logements faisant saillie vers l'avant de son embase (45), l'embase (45) ayant une face arrière qui peut être enclenchée avec la face avant (25) de l'embase (19) du coupleur (13), le boîtier (18) de logements entourant les logements (17) ;
un élément rapporté (14) pouvant être fixé à une plaque frontale (7) d'une prise (2) et définissant un orifice (56) de guidage entourant le boîtier (18) de logements, l'élément rapporté (14) étant conçu pour maintenir la face arrière de l'embase (45) du boîtier (18) de logements en enclenchement avec une première partie de la face avant (25) de l'embase (19) du coupleur (13) et pour maintenir les logements (17) en enclenchement avec une autre partie de ladite face avant (25), les secondes douilles (36) étant en alignement bout à bout avec certaines, respectives, des premières douilles (20) ; et
des manchons fendus (16) destinés à être insérés partiellement dans les premières douilles (20) et partiellement dans les secondes douilles (36) et conçus pour recevoir les premier et second connecteurs à fiches en alignement bout à bout.

2. Assemblage selon la revendication 1, dans lequel chaque seconde douille (36) fait saillie vers l'avant d'une embase (34) du logement respectif (17), laquelle embase (34) présente une face arrière qui peut être engagée avec ladite autre partie de la face avant (25) de l'embase (19) du coupleur (13).

3. Assemblage selon la revendication 2, dans lequel ladite autre partie de la face avant (25) du coupleur (13) et les faces arrière de l'embase (34) des logements (17) comporte des brides (35) et des premières fentes (32') respectives, horizontales et pouvant être enclenchées entre elles, la face arrière de l'embase (45) du boîtier (18) de logements et la première partie de la face avant (25) de l'embase (19) du coupleur (13) ayant des nervures (29, 49) et des secondes fentes (30) respectives, verticales et pouvant être enclenchées entre elles, et des ergots (47) et des évidements (48) respectifs pouvant être enclenchés entre eux pour guider lesdites nervures (29, 49) jusqu'en engagement avec lesdites fentes.

4. Assemblage selon la revendication 1, 2 ou 3, dans lequel les embases (19, 45) du coupleur (13) et du boîtier (18) de logements présentent des orifices (33, 54) pouvant être alignés et destinés à recevoir des broches (60) faisant saillie vers l'arrière d'une plate-forme (55) de l'élément rapporté (14), les broches (60) pouvant être fixées dans les orifices alignés (33, 54).

5. Assemblage selon l'une quelconque des revendications précédentes, dans lequel ladite plate-forme (55) présente une face avant (58) ayant, sur des côtés opposés dudit orifice de guidage (56), des surfaces chanfreinées pour guider des lames élastiques (9) de verrouillage, situées sur ladite plaque frontale (7), jusqu'en enclenchement de verrouillage avec la plate-forme (55), avec une flexion égale des lames (9) de verrouillage.

6. Assemblage selon l'une quelconque des revendications précédentes, dans lequel le boîtier (18) de logements comporte des compartiments (46) destinés à recevoir chacun un logement respectif (17), les compartiments (46) s'étendant vers l'avant de l'embase (45) du boîtier (18) de logements, les compartiments (46) ayant des fonds présentant des ouvertures (53) pour permettre une flexion desdites pièces d'accrochage (40) des logements (17).

7. Assemblage selon l'une quelconque des revendications précédentes, dans lequel lesdites embases (19, 45) sont fixées dans leur état d'enclenchement mutuel.
